# EUROPEAN PATENT APPLICATION

(11) **EP 4 847 249 A1**
(43) Date of publication of application: **02.12.2026**
(21) Application number: 25745164.1
(22) Date of filing: 22.01.2025
(51) Int. Cl.: B32B 33/00, B32B 3/30, B32B 27/00, E04F 13/07, E04F 13/08

(54) **DECORATIVE SHEET**

(30) Priority: 22.01.2024 JP 2024007401
(71) Applicant: Toppan Holdings Inc., Tokyo 110-0016 (JP)
(72) Inventor: HATTORI, Masashi, Tokyo 110-0016 (JP)
(74) Representative: TBK
(86) International application number: PCT/JP2025/001916
(87) International publication number: WO 2025/159123

(57) **Abstract**

The disclosure provides a decorative sheet (1) including a primary film layer (2) and a surface protective layer (5) provided on one surface of the primary film layer (2), wherein the surface protective layer (5) has a surface provided with an uneven structure; and the uneven structure of the surface protective layer (5) has a load length ratio Rmr (10%) of 0.05 or more and 0.35 or less at a cutting level of 10%, a root mean square slope Rdq of 0.15 or more and 0.4 or less, and a root mean square height Rq of 0.4 µm or more and 4.0 µm or less.

## Description

### [Technical Field]

The present invention relates to decorative sheets.

### [Background Art]

Decorative sheets are used, for example, for the purpose of imparting aesthetic properties or durability to the decorated surfaces of interior and exterior materials such as fittings, furniture, furnishing materials, and flooring materials. In general, decorative sheets are widely used for forming decorative panels in which the decorative sheets are attached to the surfaces of substrates such as wood, wood boards, metal plates, non-flammable boards, paper substrates, or resin substrates via an adhesive or the like.

Aesthetic properties are imparted, for example, by forming patterns such as wood grain or stone grain using various printing methods. Decorative sheets having plain colors without patterns are sometimes preferred. The choice of patterned or not patterned, or the choice of pattern type varies depending on the purposes and preferences.

Surface gloss is also important for the aesthetic properties of the decorative sheets. There are a variety of decorative sheets to choose from depending on the purposes and preferences, ranging from decorative sheets having mirror-like high gloss to decorative sheets having low gloss with no reflection at all.

As mentioned above, imparting durability is an important function of decorative sheets, in addition to imparting aesthetic properties. Durability is a comprehensive evaluation of scratch resistance or stain resistance, and whether these characteristics can be maintained over a long period of time. Although requirements may vary depending on the environment and circumstances in which the decorative sheets are used, decorative sheets with high performance are always in demand.

To impart durability, a surface protective layer is formed, in general, on the outermost surface of decorative sheets. To adjust gloss mentioned above, or to achieve low gloss in particular, it is common to add a matting agent (matting additive) to the surface protective layer.

Furthermore, decorative sheets preferably have processability such that they can withstand such processes as cutting or bending which are generally performed when forming decorative materials such as decorative panels.

For example, such a decorative sheet designed in consideration of aesthetic properties (low gloss), scratch resistance, and stain resistance is described in PTL 1.

### [Citation List]

### [Patent Literature]

PTL 1: JP2019119138A

### [Summary of the Invention]

The present invention aims to provide a decorative sheet which can impart the warm feeling of wood as a tactile sensation.

According to an aspect of the present invention, there is provided a decorative sheet including a primary film layer and a surface protective layer provided on one surface of the primary film layer, wherein the surface protective layer has a surface provided with an uneven structure; and the uneven structure of the surface protective layer has a load length ratio Rmr (10%) of 0.05 or more and 0.35 or less at a cutting level of 10%, a root mean square slope Rdq of 0.15 or more and 0.4 or less, and a root mean square height Rq of 0.4 µm or more and 4.0 µm or less.

According to another aspect of the present invention, there is provided the decorative sheet according to the above aspect, wherein the surface protective layer has a gloss of less than 10.

According to still another aspect of the present invention, there is provided the decorative sheet according to either of the above aspects, wherein the surface protective layer contains a cured resin and particles.

According to still another aspect of the present invention, there is provided the decorative sheet according to any of the above aspects, wherein the particles have an average particle size of 3 µm or more.

According to still another aspect of the present invention, there is provided the decorative sheet according to any of the above aspects, wherein the particles have an average particle size of 3 µm or more and 10 µm or less.

According to still another aspect of the present invention, there is provided the decorative sheet according to any of the above aspects, wherein the particles are contained in the surface protective layer in an amount of 3 parts by mass or more and 11 parts by mass or less relative to 100 parts by mass of the resin.

According to still another aspect of the present invention, there is provided the decorative sheet according to any of the above aspects, wherein the resin comprises an ionizing radiation curable resin.

According to still another aspect of the present invention, there is provided the decorative sheet according to any of the above aspects, wherein the resin comprises an acrylate.

According to still another aspect of the present invention, there is provided the decorative sheet according to any of the above aspects, wherein the resin comprises a trifunctional acrylate containing a repeating structure; and the number of repeat units of the repeating structure is 15 or more and 20 or less.

According to still another aspect of the present invention, there is provided the decorative sheet according to any of the above aspects, wherein the resin comprises a tetrafunctional acrylate containing a repeating structure; and the number of repeat units of the repeating structure is 20 or more and 35 or less.

According to still another aspect of the present invention, there is provided the decorative sheet according to any of the above aspects, wherein the surface protective layer has a thickness of 2 µm or more and 10 µm or less.

According to still another aspect of the present invention, there is provided the decorative sheet according to any of the above aspects, further including a pattern layer between the primary film layer and the surface protective layer.

According to still another aspect of the present invention, there is provided the decorative sheet according to the above aspect, wherein the pattern layer has a wood grain pattern.

According to still another aspect of the present invention, there is provided a decorative material including the decorative sheet according to any of the above aspects, and a substrate to which the decorative sheet is attached.

According to the present invention, there is provided a decorative sheet which can impart the warm feeling of wood as a tactile sensation.

### [Brief Description of the Drawings]

Fig. 1 is a cross-sectional view illustrating a decorative material including a decorative sheet according to an embodiment of the present invention.
Fig. 2 is a cross-sectional view illustrating a surface protective layer included in the decorative sheet of Fig. 1.
Fig. 3 is a microscopic image of a surface protective layer included in a decorative sheet according to an example of the present invention.

### [Description of the Embodiments]

Referring to the drawings, some embodiments of the present invention will be described. The embodiments described below are more specific implementations of any of the aspects set forth above. The matters described below can be incorporated into the aspects set forth above, either alone or in combination.

The embodiments described below are merely example configurations for embodying the technical idea of the present invention, and the technical idea of the present invention should not limit the materials, shapes, structures, and the like of the components to those described below. Various modifications can be added to the technical idea of the present invention within the technical scope recited in the claims.

It should be noted that components having the same or similar functions are denoted by the same reference signs in the drawings referred to below, and redundant description is omitted. The drawings are only schematic, and the relationships between dimensions in one direction and another direction, dimensions of a component and another component, and the like may be different from actual relationships.

### <1> Decorative material and decorative sheet

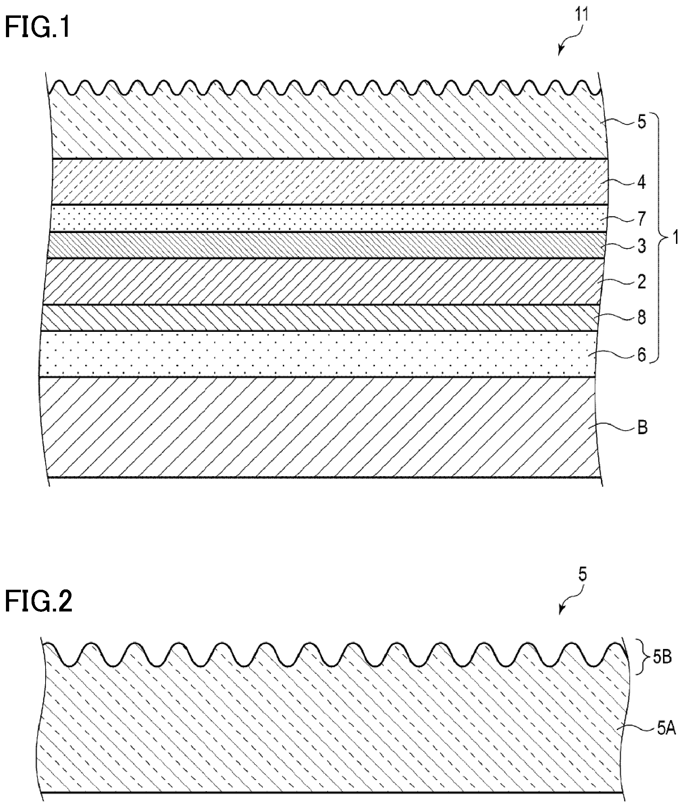

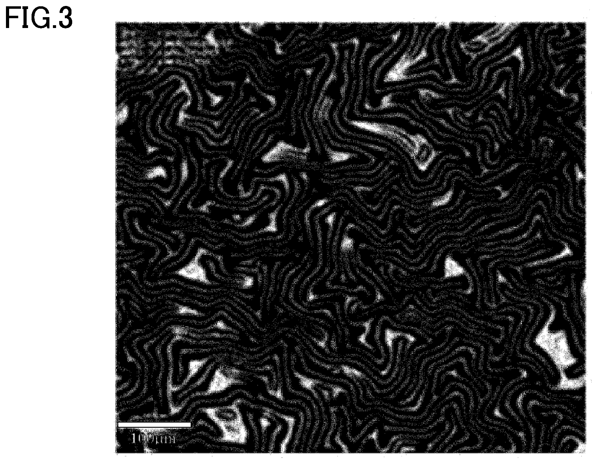

Fig. 1 is a cross-sectional view illustrating a decorative material including a decorative sheet according to an embodiment of the present invention. Fig. 2 is a cross-sectional view illustrating a surface protective layer included in the decorative sheet of Fig. 1. Fig. 3 is a microscopic image of a surface protective layer included in a decorative sheet according to an example of the present invention.

The cross section shown in Fig. 2 is a cross section taken along the thickness direction of the surface protective layer. The microscope image shown in Fig. 3 is a plan-view image captured using a laser microscope (OLS-4000 manufactured by Olympus Corporation).

A decorative material 11 shown in Fig. 1 includes a substrate B and a decorative sheet 1 attached to the substrate B. The decorative material 11 in this example is a decorative panel. The decorative panel may be flat, or may be curved or folded. The decorative material 11 may have other shapes than a plate shape.

The substrate B in this example is a board material. The board material may, for example, be a wood board, inorganic board, metal board, or composite board made of multiple materials. The substrate B may have other shapes than a plate shape.

The decorative sheet 1 includes a primary film layer 2, a pattern layer 3, a transparent resin layer 4, a surface protective layer 5, an adhesive layer 7, a primer layer 6, and a concealing layer 8. The pattern layer 3, the adhesive layer 7, the transparent resin layer 4, and the surface protective layer 5 are provided in this order on the surface of the primary film layer 2 facing away from the surface facing the substrate B. The concealing layer 8 and the primer layer 6 are provided in this order on the surface of the primary film layer 2 facing the substrate B. One or more of the pattern layer 3, the transparent resin layer 4, the primer layer 6, the adhesive layer 7, and the concealing layer 8 may be omitted. The components included in the decorative sheet 1 will be sequentially described below.

### <1.1> Primary film layer

The primary film layer 2 or the material thereof may be made of any material selected, for example, from paper, synthetic resins, synthetic resin foam, rubber, non-woven fabric, synthetic paper, metal foil, etc. Examples of the paper include tissue paper, titanium paper, and resin-impregnated paper. Examples of the synthetic resins include polyethylenes, polypropylenes, polybutylenes, polystyrenes, polycarbonates, polyesters, polyamides, ethylene-vinyl acetate copolymers, polyvinyl alcohols, and acrylic resins. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethanes. As the non-woven fabric, organic or inorganic non-woven fabric can be used. Examples of the metal used for the metal foil include aluminum, iron, gold, and silver.

Considering printability, costs, and the like, the primary film layer 2 preferably has a thickness in the range of 20 µm or more and 250 µm or less.

### <1.2> Primer layer

When an olefin-based resin is used as the primary film layer 2, the surface of the primary film layer 2 is often in an inactive state. Accordingly, in this case, the primer layer 6 is preferably provided between the primary film layer 2 and the substrate B. If the primary film layer 2 is made of an olefin-based material, the primer layer 6 may be omitted, and the primary film layer 2 may undergo a surface modification treatment such as corona treatment, plasma treatment, ozone treatment, electron beam treatment, UV treatment, and dichromate treatment, in order to improve adhesion between the primary film layer 2 and the substrate B.

As the materials for the primer layer 6, for example, the materials mentioned later for the pattern layer 3 may be used. Considering that the decorative sheet 1 is taken up in a roll form, the primer layer 6, which is provided to the rear surface of the decorative sheet 1, may additionally contain an inorganic filler to avoid blocking and improve adhesion to the adhesive. Examples of the inorganic filler include silica, alumina, magnesia, titanium oxide, and barium sulfate.

### <1.3> Concealing layer

To impart concealment properties to the decorative sheet 1 for the substrate B, a colored sheet may be used as the primary film layer 2, for example, or an opaque concealing layer 8 may be provided. For example, the concealing layer 8 may be made of the same materials as those materials described later for the pattern layer 3. However, since the concealing layer 8 is provided to impart concealment properties, the pigment used is preferably an opaque pigment such as titanium oxide or iron oxide. Furthermore, in order to improve concealment properties, the material of the concealing layer 8 can contain metal, such as gold, silver, copper, or aluminum. In general, aluminum flakes may often be added.

### <1.4> Pattern layer

The pattern layer 3 is a layer formed by printing patterns on the primary film layer 2 using ink. As the binder of the ink, nitrocellulose, cellulose, vinyl chloride-vinyl acetate copolymer, polyvinyl butyral, polyurethane, acrylics, polyesters, or modified products thereof, for example, can be used alone or in combination. The binder may be any of aqueous, solvent, and emulsion types, and may be of a one-part type or a two-part type that uses a curing agent. The pattern layer 3 may be formed using a method in which a layer made of a curable ink is cured by irradiation of UV light, electron beams, or the like. The most common method among these is a method in which a urethane-based ink is cured using an isocyanate. The ink used for forming the pattern layer 3 may further contain, for example, colorants such as pigments and dyes contained in ordinary inks, extender pigments, solvents, and various additives, in addition to these binders. Examples of highly versatile pigments include condensed azo, insoluble azo, quinacridone, isoindoline, anthraquinone, imidazolone, cobalt, phthalocyanine, carbon, titanium oxide, iron oxide, and pearl pigments such as mica.

Separate from applying an ink, various metals can be vapor-deposited or sputtered to provide patterns to the pattern layer 3. In particular, a photostabilizer is preferably added to the ink. This can suppress deterioration of the decorative sheet 1 itself caused by photodegradation of the ink, and can extend the life of the decorative sheet 1.

In the decorative sheet 1 shown in Fig. 1, the pattern layer 3 is provided between the primary film layer 2 and the adhesive layer 7; however, it may be provided at any position between the primary film layer 2 and the surface protective layer 5. The pattern layer 3 preferably has a wood grain pattern. If the pattern layer 3 has a wood grain pattern, the user may easily perceive a tactile sensation of wood from the visual information also. The pattern layer 3 may be omitted.

### <1.5> Adhesive layer

The adhesive layer 7 is a layer also referred to as a thermal adhesive layer, anchor coat layer, or dry lamination adhesive layer.

The resin material for the adhesive layer 7 is not particularly limited, but can be appropriately selected, for example, from resin materials such as acrylic resins, polyester-based resins, polyurethane-based resins, and epoxy-based resins. As the resin material for the adhesive layer 7, for example, an ethylene-vinyl acetate copolymer resin-based adhesive can also be used. The coating method can be appropriately selected according to the viscosity or the like of the adhesive. In general, gravure coating is used to form the adhesive layer 7 on the upper surface of the pattern layer 3, and then the transparent resin layer 4 is laminated. If a sufficient adhesive strength is obtained between the transparent resin layer 4 and the pattern layer 3, the adhesive layer 7 may be omitted.

### <1.6> Transparent resin layer

As the resin material for the transparent resin layer 4, an olefin-based resin is preferably used. Examples of the olefin-based resin include, besides polypropylenes, polyethylenes, polybutenes, and the like, homopolymers of an α-olefin or copolymers of one or more α-olefins (e.g., propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and copolymers of ethylene or an α-olefin with other monomers, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, and ethylene-butyl acrylate copolymer.

In order to improve the surface strength of the decorative sheet 1, a highly crystalline polypropylene is preferably used as the resin for the transparent resin layer 4. As necessary, the transparent resin layer 4 may additionally contain various additives such as a thermal stabilizer, photostabilizer, anti-blocking agent, catalyst scavenger, colorant, light scattering agent, and matting agent. Generally, phenol-, sulfur-, phosphorus-, and hydrazine-based thermal stabilizers, and hindered amine-based photostabilizers are added in any combination.

### <1.7> Surface protective layer

The surface protective layer 5 includes a core portion 5A and a plurality of ridge portions 5B protruding in a ridge-like shape from one side of the core portion 5A. The ridge portions 5B form an uneven structure.

In the decorative sheet 1 according to the present embodiment, the term ridge-like refers to convexities which are linear in plan view. The ridge portions 5B may have a curved or linear shape in plan view, but preferably have a curved shape from the perspective of fingerprint resistance of the decorative sheet 1. The ridge portions 5B may or may not be branched in plan view. In the present disclosure, the ridge portions 5B refer to, for example, the portions from the lowest part to the tip of the uneven shape provided on the surface of the surface protective layer 5, and the core portion 5A refers to the portion of the surface protective layer 5 excluding the ridge portions 5B.

For example, as shown in Fig. 3, the ridge portions 5B may be curved, and at least part of them may be adjacent to each other in the width direction. In an area where at least part of the ridge portions 5B are adjacent to each other in the width direction, a cross section of the surface protective layer 5 taken along the direction parallel to this width direction and parallel to the thickness direction of the surface protective layer 5 has a corrugated shape, such as a sinusoidal waveform, as shown in Fig. 2, in the portion where the uneven structure is formed.

The surface protective layer 5 preferably covers the entire upper surface of the underlying layer (the transparent resin layer 4 in the present embodiment) contacting the surface protective layer 5. In other words, in the decorative sheet 1 according to the present embodiment, it is preferable that the underlying layer (i.e., the transparent resin layer 4) contacting the surface protective layer 5 is not exposed on the surface.

The uneven structure of the surface protective layer 5 has a load length ratio Rmr (10%) of 0.05 or more and 0.35 or less at a cutting level of 10%. The load length ratio Rmr (10%) is preferably 0.1 or more and 0.3 or less, and more preferably 0.15 or more and 0.25 or less. The lower the load length ratio Rmr (10%), the steeper the slope near the apex of each convexity, and therefore the smaller the amount of contact may become between the user's finger and the convexities when the user touches the uneven structure with their finger. Accordingly, the user's heat is less likely to transfer to the decorative sheet and the user may feel a greater sense of warmth.

The load length ratio Rmr (10%) is the ratio of a load length of a roughness curve at a cutting level of 10% to an evaluation length. The cutting level of 10% is a level at which the distance in the depth direction from a highest point of the roughness curve as a reference point is 10% of a maximum cross-sectional height Rt. When the user lightly touches the uneven structure with their finger, the user's finger touches the convexities from the highest points to about 10% the height of the convexities in the depth direction. Therefore, the load length ratio Rmr (10%) correlates with the amount of contact between the user's finger and the convexities when the user lightly touches the uneven structure with their finger. The load length ratio Rmr (10%) and the maximum cross-sectional height Rt are surface texture parameters defined by JIS B 0601:2013. For measurement of the roughness curve, a contact-type surface roughness meter can be used.

The load length ratio Rmr (10%) can be expressed by the following Formula 1.
[Math. 1] $Rmr \left(10%\right) = \frac{Ml \left(10%\right)}{ln}$ Formula 1

In the formula, ln represents an evaluation length, and Ml (10%) represents a load length of the roughness curve at a cutting level of 10%.

The uneven structure of the surface protective layer 5 has a root mean square slope Rdq of 0.15 or more and 0.4 or less. The root mean square slope Rdq is preferably 0.2 or more and 0.35 or less, and more preferably 0.25 or more and 0.3 or less.

The root mean square slope Rdq is a root mean square of a local slope of the roughness curve in a reference length. The root mean square slope Rdq is a parameter that can be used for evaluating the size of a local slope angle. Specifically, the root mean square slope Rdq is a numerical representation of the steepness of the convexities or the concavities contained in the uneven structure. The root mean square slope Rdq is a surface texture parameter defined by JIS B 0601:2013.

The root mean square slope Rdq can be expressed by the following Formula 2.
[Math. 2] $Rdq = \sqrt{\frac{1}{l} {\int }_{0}^{l} {\left[\frac{d}{dx}Z\left(x\right)\right]}^{2} dx}$ Formula 2

In the formula, l represents a reference length and dZ(x)/dx represents a local slope of the roughness curve.

The uneven structure of the surface protective layer 5 has a root mean square height Rq of 0.4 µm or more and 4.0 µm or less. The root mean square height Rq is preferably 1.0 µm or more and 3.5 µm or less, and more preferably 1.5 µm or more and 3.0 µm or less.

The root mean square height Rq is a root mean square of a vertical coordinate Z(x) of the roughness curve in the reference length l. The root mean square height Rq is a parameter that can be used for evaluating the size of the convexities or the concavities in the height direction contained in the uneven structure. The root mean square height Rq is a surface texture parameter defined by JIS B 0601:2013.

The root mean square height Rq can be expressed by the following Formula 3.
[Math. 3] $Rq = \sqrt{\frac{1}{l} {\int }_{0}^{l} {Z}^{2} \left(x\right) dx}$ Formula 3

In the formula, l represents a reference length and Z(x) represents a vertical coordinate of the roughness curve.

A thickness t of the surface protective layer 5 is preferably 2 µm or more and 10 µm or less. The thickness t of the surface protective layer 5 is more preferably 3 µm or more and 10 µm or less. If the thickness of the surface protective layer 5 is excessively small or excessively large, the warm tactile sensation of wood may be difficult to achieve. If the thickness of the surface protective layer 5 is excessively small, low gloss may tend to be difficult to achieve. If the thickness of the surface protective layer 5 is excessively large, high processability may tend to be difficult to achieve. The processability will be described later. The thickness of the surface protective layer 5 is obtained by observing a cross section using a scanning electron microscope and calculating a 25-point average thickness of the cross section. Specifically, the thickness of the surface protective layer 5 can be obtained as in the examples described later. If the surface protective layer-forming coating liquid described later does not contain a solvent, the thickness of the coating film formed of the surface protective layer-forming coating liquid may be equal to the thickness of the surface protective layer 5.

Preferably, the surface protective layer 5 contains the cured resin and particles.

The resin contained in the surface protective layer 5 is preferably an ionizing radiation curable resin. The term ionizing radiation may refer to charged particle beams such as electron beams. The ionizing radiation curable resin can be cured by ionizing radiation irradiation. The ionizing radiation curable resin can also be cured by UV irradiation. The ionizing radiation curable resin used here can be cured by irradiation of light having a wavelength of 200 nm or less, while having a large absorption coefficient for this light.

The content of the cured ionizing radiation curable resin in the surface protective layer 5 is preferably 60 mass% or more, more preferably 70 mass% or more, and even more preferably 80 mass% or more. The ionizing radiation curable resin may be any known resin, such as various monomers or commercially available oligomers, examples of which include (meth)acrylic resins, silicone-based resins, polyester-based resins, urethane-based resins, amide-based resins, and epoxy-based resins. The ionizing radiation curable resin may be either an aqueous resin or nonaqueous (organic solvent-based) resin.

The ionizing radiation curable resin preferably contains an acrylate as a main component. The main component of the ionizing radiation curable resin refers to the component occupying 60 mass% or more in the ionizing radiation curable resin. The ionizing radiation curable resin preferably contains an acrylate in an amount of 70 parts by mass or more, and more preferably 80 parts by mass or more. The ionizing radiation curable resin is more preferably an acrylate.

The acrylate is preferably a bifunctional or higher acrylate, and more preferably a trifunctional or higher acrylate. From the perspective of obtaining a surface protective layer 5 having excellent scratch resistance, the acrylate is preferably a trifunctional or higher acrylate. There is no upper limit to the number of functional groups of the acrylate, but according to an example, it may be six or less, and preferably four or less.

The acrylate preferably contains a repeating structure. For example, the repeating structure may be any of an ethylene oxide (EO) structure, propylene oxide (PO) structure, and ε-caprolactone (CL) structure. It is preferable that the repeating structure is an ethylene oxide or propylene oxide structure. In the acrylate, the repeating structure can be present between the acryloyl group and the methylol group in an open ring state.

The number of repeat units of the repeating structure is preferably 3 or more, and more preferably 15 or more. The number of repeat units of the repeating structure may be 50 or less, for example. If an acrylate with a large number of repeat units is used, the cured film is likely to expand in the in-plane direction thereof in the second irradiation step described later, and therefore wrinkles corresponding to the ridge portions 5B are likely to appear on the surface of the coating film. Use of an acrylate with a greater number of repeat units tends to reduce gloss and thus tends to improve aesthetic properties. However, if the number of repeat units is excessively large, the crosslink density may be reduced and the scratch resistance of the surface protective layer may be deteriorated. Use of an acrylate with a small number of repeat units may make it difficult to achieve high processability.

In a preferred mode, the ionizing radiation curable resin may be a trifunctional acrylate containing a repeating structure. Examples of the trifunctional acrylate containing a repeating structure include an EO-, PO- or CL-modified trimethylolpropane triacrylate, glycerin triacrylate, isocyanurate triacrylate, and pentaerythritol triacrylate. In the trifunctional acrylate containing a repeating structure, the number of repeat units of the repeating structure is preferably 15 or more and 20 or less.

In another preferred mode, the ionizing radiation curable resin may be a tetrafunctional acrylate containing a repeating structure. A tetrafunctional acrylate containing a repeating structure may be, for example, an EO-, PO- or CL-modified pentaerythritol tetraacrylate. In the tetrafunctional acrylate containing a repeating structure, the number of repeat units of the repeating structure is preferably 20 or more and 35 or less.

The number of repeat units of the repeating structure can be analyzed using an MALDI-TOF-MS analysis. The ionizing radiation curable resin may have a molecular weight distribution. If there is a molecular weight distribution, the number of repeat units is taken to be the number of repeat units corresponding to the molecular weight having the most intense peak in the MALDI-TOF-MS mass spectrum.

Examples of the particles that can be used contained in the surface protective layer 5 include particles of organic materials such as polyethylene (PE) wax, polypropylene (PP) wax, and resin beads, and particles of inorganic materials such as silica, glass, alumina, titania, zirconia, calcium carbonate, and barium sulfate. If the surface protective layer 5 contains particles, the warm tactile sensation of wood may be easily obtained when the user presses their finger against the surface of the decorative sheet 1 and slides it across the surface.

The particles preferably have an average particle size (D50) of 3 µm or more. The average particle size (D50) is more preferably 3 µm or more and 10 µm or less, and even more preferably 4 µm or more and 10 µm or less.

If the surface protective layer 5 contains particles, wrinkles can be produced more uniformly on the surface of the coating film in the second irradiation step described later. As the average particle size (D50) increases, the user may tend to perceive a stronger tactile sensation from the convexities/concavities of the particles. For this reason, if the average particle size (D50) is excessively large, the warm tactile sensation of wood may tend to be difficult to achieve. If the average particle size (D50) increases, particles are likely to shed from the surface protective layer 5, and it may become difficult to achieve high scratch resistance. If large-size particles are used, it may become difficult to achieve high processability. If small-size particles are used, the effect of uniformly producing wrinkles may tend to be reduced. For this reason, if the particle size is small, the warm tactile sensation of wood may tend to be difficult to achieve.

The average particle size (D50) refers to a median diameter (D50) measured using a laser diffraction/scattering particle size distribution measuring device. If the surface protective layer-forming coating liquid contains particles, the surface protective layer 5 obtained from this coating liquid also contains particles. In order to obtain the average particle size of the particles contained in the surface protective layer 5, the diameters of a plurality of particles are actually measured, while observing a cross section of the layer, and the measured diameters are averaged. The value obtained in this way is substantially the same as the median diameter (D50) measured using a laser diffraction/scattering particle size distribution measuring device. Therefore, the above range of the average particle size can also be interpreted as the range of average particle size of the particles contained in the surface protective layer 5.

The content of the particles in the surface protective layer 5 is preferably 3 parts by mass or more and 11 parts by mass or less relative to 100 parts by mass of the resin. The amount of particles added is preferably 4 parts by mass or more and 10 parts by mass or less relative to 100 parts by mass of the resin. The expression 100 parts by mass of the resin refers to the mass parts of the solid content of the resin.

If the added amount of particles is in the above range, wrinkles can be produced even more uniformly on the surface of the coating film in the second irradiation step described later. If the added amount of particles is large, particles are likely to shed from the surface protective layer 5, and it may become difficult to achieve high scratch resistance and high processability. If the added amount of particles is large, it may become difficult to achieve high stain resistance. If the added amount of particles is small, the effect of uniformly producing wrinkles may tend to be reduced.

The surface protective layer 5 preferably has a gloss of less than 10.0. The gloss of the surface protective layer 5 is more preferably 5 or less. The gloss refers to a measurement value measured at an incidence angle of 60 degrees using a gloss meter conforming to JIS Z 8741:1997.

### <2> Method of producing decorative sheet

For example, the decorative sheet 1 can be prepared using the following method. To simplify, description related to the pattern layer 3, transparent resin layer 4, primer layer 6, adhesive layer 7, and concealing layer 8 is omitted.

First, a surface protective layer-forming coating liquid is prepared. For example, the surface protective layer-forming coating liquid may contain the resins and the particles mentioned above. The surface protective layer-forming coating liquid can further contain a solvent and additives such as an antibacterial agent and an antifungal agent for improving the functionality of the final product. The surface protective layer-forming coating liquid can further contain other additives such as a UV absorber and a photostabilizer. As the UV absorber, for example, benzotriazole-based, benzoate-based, benzophenone-based, and triazine-based UV absorbers can be used. As the photostabilizer, for example, a hindered amine-based photostabilizer, etc. can be used. According to the method described here, a surface protective layer 5 having a low gloss can be formed without using a matting agent (matting additive).

If the entire coating film made of the surface protective layer-forming coating liquid is cured by UV irradiation in the third irradiation step described later, it is preferable that the surface protective layer-forming coating liquid further contains a photoinitiator. Examples of the photoinitiator include, although not particularly limited, benzophenone-based, acetophenone-based, benzoin ether-based, and thioxanthone-based photoinitiators.

It is preferable that the surface protective layer-forming coating liquid is sufficiently stirred before being applied to one surface of the primary film layer 2 so that the particles are uniformly dispersed in the dispersion medium. Uniform dispersion of the particles in the dispersion medium can easily allow wrinkles to appear on the surface of the surface protective layer 5.

Next, the surface protective layer-forming coating liquid is applied to one surface of the primary film layer 2 to form a coating film made of the surface protective layer-forming coating liquid. This coating film can be formed using, for example, various printing methods such as gravure printing, offset printing, screen printing, electrostatic printing, and inkjet printing, and various coating methods such as roll coating, knife coating, microgravure coating, and die coating.

Following the formation of the coating film made of the surface protective layer-forming coating liquid, a first irradiation step is performed. In the first irradiation step, the coating film is irradiated with light having a wavelength of approximately 200 nm or more and 400 nm or less (hereinafter referred to as first radiation). Thus, the coating film is partially cured. By partially curing the coating film by performing the first irradiation step, a wrinkled uneven structure (texture) appearing due to the second irradiation step described later can be uniformly produced. Alternatively, by appropriately determining the irradiation conditions in the first irradiation step, the uneven structure, or in particular the depth of the uneven structure, can be adjusted.

The light source used in the first irradiation step can be selected from, for example, a high-pressure mercury lamp, metal halide lamp, and single-wavelength LED lamp emitting light with a wavelength of 200 nm or more and 400 nm or less.

Integrated light quantity in the first irradiation step is preferably 2 mJ/cm² or more and 100 mJ/cm² or less, more preferably 10 mJ/cm² or more and 80 mJ/cm² or less, and even more preferably 20 mJ/cm² or more and 60 mJ/cm² or less. If the integrated light quantity is decreased, the effects of the first irradiation step described above are not apparent. If the integrated light quantity is excessively increased, the coating film may be completely cured and wrinkles not formed in the second irradiation step that follows.

After completing the first irradiation step, a second irradiation step is performed. In the second irradiation step, the coating film is irradiated with light having a wavelength of 200 nm or less (hereinafter referred to as second radiation). The ionizing radiation curable resin contained in the surface protective layer-forming coating liquid has a large absorption coefficient for the second radiation. For this reason, the second radiation incident on the coating film can only reach the depth of several tens to several hundreds of nm from the outermost surface of the film. Therefore, in the second irradiation step, crosslinking reactions proceed in the surface region of the coating film to form an extremely thin cured film, while in other regions, crosslinking reactions do not proceed and the coating film remains partially cured.

The coating film that has undergone the second irradiation step has wrinkles on the surface corresponding to the ridge portions 5B. The present inventor considers the reason why the wrinkles appear on the surface of the coating film due to the second irradiation step to be as follows.

As described above, the second radiation can only reach the depth of several tens to several hundreds of nm from the outermost surface of the coating film. Specifically, the crosslinking reactions of the ionizing radiation curable resin due to irradiation of the second radiation may occur only in the surface region of the coating film, and the regions more than several tens to several hundreds of nm from the outermost surface may remain partially uncured, containing highly fluid molecules. Such highly fluid molecules may swell the cured film, increasing the volume of the cured film. The cured film may buckle due to the in-plane compressive stress caused by volume increase in the in-plane direction, whereby wrinkles may appear on the surface of the coating film.

The second radiation can be extracted from excimer VUV (vacuum ultra violet) light. The excimer VUV light can be produced from a lamp that uses a noble gas or a noble gas halide compound. When electrons having high energy are externally applied to a lamp in which a noble gas or a gas of a noble gas halide compound is sealed, a large quantity of discharge plasma (dielectric barrier discharge) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of light emitted from the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy or the difference between the wavelength and the binding energy of the organic materials, the light source to be used is preferably a xenon lamp emitting excimer light with a center wavelength of 172 nm. Also, considering the cost of maintaining the equipment, availability of materials, etc., a xenon lamp is preferably used as a light source.

The second irradiation step is performed under an atmosphere in which the oxygen concentration is low. Oxygen has a large absorption coefficient for light of 200 nm or less. Accordingly, for example, the second irradiation step may be preferably performed under a nitrogen gas atmosphere. The oxygen concentration in the gas phase in the second irradiation step, i.e., the residual oxygen concentration in the reaction atmosphere, is preferably 2,000 ppm or less, and more preferably 1,000 ppm or less.

The oxygen in the atmosphere inhibits radical polymerization. Therefore, the residual oxygen concentration in the reaction atmosphere affects the formation of wrinkles on the surface of the coating film. Therefore, if the residual oxygen concentration in the reaction atmosphere is changed, the surface texture of the surface protective layer 5 may also change.

The integrated light quantity of the second radiation is preferably 0.5 mJ/cm² or more and 200 mJ/cm² or less, more preferably 1 mJ/cm² or more and 100 mJ/cm² or less, even more preferably 3 mJ/cm² or more and 50 mJ/cm² or less, and most preferably 5 mJ/cm² or more and 30 mJ/cm² or less. If the integrated light quantity is reduced, expansion of the cured film in the in-plane direction may be reduced. If the integrated light quantity is excessively increased, the surface conditions of the coating film may be deteriorated.

After completing the second irradiation step, a third irradiation step is performed. In the third irradiation step, the coating film is irradiated with third radiation to cure the entire coating film. Thus, a surface protective layer 5 is obtained.

The third radiation is ionizing radiation such as electron beams, or UV light having a longer wavelength compared to the first radiation.

The integrated light quantity of the third radiation is preferably 10 mJ/cm² or more and 500 mJ/cm² or less, more preferably 50 mJ/cm² or more and 400 mJ/cm² or less, and even more preferably 100 mJ/cm² or more and 300 mJ/cm² or less.

The decorative sheet 1 can be produced using the method described above, for example. The decorative sheet 1 may be produced using other methods. For example, an original plate may be formed using the method described for the surface protective layer 5, and performing transfer using the original plate, a surface protective layer 5 having an uneven structure on the surface thereof may be formed.

The present inventor considers the reason why the surface protective layer 5 having the surface texture characterized by the above parameters can be obtained using the above method to be as follows.

As described above, by appropriately setting the irradiation conditions of the first radiation, the periodicity of the convexities/concavities in the uneven structure or the depth of the uneven structure (i.e., the size of the convexities and concavities in the height direction) can be adjusted. For example, if the integrated light quantity of the first radiation is increased, the degree of partial curing may increase even more in the partially cured coating film obtained as a result of the irradiation with the first radiation. After that, only the surface region of the coating film is cured and the cured film is buckled to form an uneven structure; however, in this case, the higher the degree of the partial curing in the coating film obtained as a result of the irradiation with the first radiation, the higher the bending rigidity may become in the surface region (cured region) of the coating film during irradiation with the second radiation and thus the higher the viscosity may become in the underlying region (partially cured region) located under the surface region (cured region). As the bending rigidity increases in the surface region, the periodicity of the convexities/concavities may become larger in the uneven structure as formed, and as the viscosity increases in the underlying region, it may become more difficult to increase the volume of the surface region, reducing the depth of the uneven structure accordingly. In this way, it is considered that the integrated light quantity of the first radiation may affect the periodicity of the convexities/concavities of the uneven structure or the depth of the uneven structure.

It is also considered that the thickness of the coating film formed of the surface protective layer-forming coating liquid may affect the depth of the uneven structure. As the thickness of the coating film formed of the surface protective layer-forming coating liquid increases, the thickness of the uneven structure may tend to increase. Furthermore, it is also considered that the integrated light quantity of the second radiation may also affect the degree of expansion of the cured film in the thickness direction or the in-plane direction of the cured film and may affect the periodicity of the convexities/concavities of the uneven structure or the depth of the uneven structure. Increase of the integrated light quantity of the second radiation may tend to decrease the periodicity of the convexities/concavities and increase the depth of the uneven structure.

Furthermore, it is considered that the oxygen concentration in the gas phase in the second irradiation step may affect the shape of the convexities of the uneven structure. The effect of the low oxygen concentration in the gas phase in the second irradiation step on crosslinking reactions may increase toward the surface of the coating film, and therefore in the second irradiation step, crosslinking reactions may tend to progress in the apexes of the convexities. For this reason, curing may easily progress in the apexes of the convexities compared to other portions of the convexities. Also, irradiation of the first and second radiations in combination may allow the coating film to partially cure by the time the second irradiation step starts. Therefore, the progress of curing may be particularly rapid in the apexes of the convexities, and after the progress of curing, the cured film may be unlikely to expand in the in-plane direction thereof. Consequently, the convexities may tend to have a steeper slope in the vicinity of the apexes compared to other portions thereof.

### <3> Effects

The decorative sheet 1 described referring to Figs. 1 to 3 includes the surface protective layer 5 having the surface texture as described above. Such a decorative sheet 1 can give the user the warm tactile sensation of wood when the user presses their skin against the surface of the surface protective layer 5 and slides it across the surface, e.g., when the user presses their finger against the surface of the surface protective layer 5 and slides it across the surface. Such a decorative sheet 1 not only exhibits low gloss and excellent aesthetic properties but also provides an excellent tactile sensation. Hereinafter, the tactile sensation will be described.

In the decorative sheet 1 described above, the load length ratio Rmr (10%) of the uneven structure of the surface protective layer 5 is in the range mentioned above. Therefore, when the user lightly touches the uneven structure with their finger, the contact area between the finger and the convexities is relatively small. Normally, when the decorative sheet 1 is placed under a room temperature environment, the temperature at the surface of the decorative sheet 1 is lower than the user's body temperature. Therefore, when the user lightly touches the decorative sheet 1 with their finger, the user's heat is less likely to be transferred to the decorative sheet 1 and the user can feel warmth as a tactile sensation.

In the decorative sheet 1 described above, the root mean square slope Rdq of the uneven structure of the surface protective layer 5 is in the range mentioned above. In the decorative sheet 1 described above, the root mean square height Rq of the uneven structure of the surface protective layer 5 is in the range mentioned above. The convexities forming such an uneven structure are appropriately steep and have an appropriate size in the height direction. Therefore, when the user slides their finger across the surface of the surface protective layer 5, the decorative sheet 1 may stimulate the user's finger and give the user a slightly coarse tactile sensation, i.e., the tactile sensation of wood.

In this way, if the load length ratio Rmr (10%) of the uneven structure is in the above range, the decorative sheet 1 may give the user the warm tactile sensation and if the root mean square slope Rdq and the root mean square height Rq of the uneven structure are in the above ranges, the decorative sheet 1 may give the user the tactile sensation of wood. Therefore, the decorative sheet 1 may give the user a tactile sensation, i.e., the warm tactile sensation of wood, that is a combination of these two tactile sensations.

If the frequencies of the convexities and the concavities of the uneven structure are approximately the same, the uneven structure in which the convexities have steep apexes has a smaller load length ratio Rmr (10%) compared to the uneven structure in which the convexities have moderate apexes. In this case, they can be distinguished from each other based on only the parameter of the load length ratio Rmr (10%). On the other hand, an uneven structure in which the convexities have steep apexes and the frequencies of the convexities/concavities are high may have approximately the same load length ratio Rmr (10%) as an uneven structure in which the convexities have moderate apexes and the frequencies of the convexities/concavities are low. In this case, they cannot be distinguished from each other based on only the parameter of the load length ratio Rmr (10%). Specifically, it is difficult for the parameter of the load length ratio Rmr (10%) alone to express the convexities of the uneven structure being appropriately steep and having appropriate size in the height direction (i.e., giving the user a tactile sensation of wood). Therefore, it may be appropriate to use the load length ratio Rmr (10%) in combination with the root mean square slope Rdq and the root mean square height Rq, as a parameter expressing the warm tactile sensation of wood.

The surface protective layer 5 of the decorative sheet 1, which has the surface texture as described above, can achieve a low gloss even when it does not contain a matting agent (matting additive). Matting agents reduce the oil repellency of layers formed of resin materials, and therefore surface protective layers 5 containing matting agents are easily stained with fingerprints. The surface protective layer 5, which does not contain any matting agent, is less likely to absorb oil, and therefore is less likely to be stained with fingerprints. The surface protective layer 5 having excellent oil repellency is less susceptible to oil stains and adsorption of contaminants. In addition, in the surface protective layer 5 not containing any matting agent, particles of the matting agent do not shed from the surface when scratched, and therefore the decorative sheet 1 including such a surface protective layer 5 is less likely to cause gloss changes or scratches.

As described above, the surface protective layer 5 described above can achieve low gloss. In this case, the surface protective layer 5 can reduce reflection of external light on the surface thereof. Accordingly, for example, if the pattern layer 3 has a wood grain pattern, the wood grain pattern may be visible as a clear pattern. It should be noted that, although the parameters mentioned above are associated with low gloss, parameters other than the above parameters are also associated with the achievement of low gloss. Therefore, low-gloss decorative sheets may not necessarily satisfy the requirements of the above parameters.

The reasons why the surface protective layer 5 having the above surface texture can be obtained through the above method are considered to be as follows in addition to the reasons described above.

Oxygen in the gas phase in the second irradiation step not only absorbs short-wavelength UV light, but also inhibits radical polymerization. The effect of oxygen in the gas phase on radical polymerization is greatest in portions of the coating film of the ionizing radiation curable resin adjacent to the gas phase, but the effect decreases as the distance from the surface of the coating film increases. Therefore, in the second irradiation step, the oxygen concentration in the gas phase may be changed to change the relationship between the distance from the surface of the coating film and the progress of the crosslinking reactions.

The change of this relationship may lead to change in thickness of the cured film produced on the surface of the coating film in the second irradiation step, or change in expansion degree of the cured film in the in-plane direction with the progress of the crosslinking reactions. As described above, the expansion degree of the cured film in the thickness or in-plane direction thereof is also affected by the integrated light quantities in the first and second irradiation steps. Also, the expansion degree of the cured film in the thickness or in-plane direction thereof affects the surface texture of the surface protective layer. Furthermore, the size and added amount of the particles in the coating film as well as the thickness of the coating film also affect the formation of wrinkles.

Accordingly, a surface protective layer having a desired surface texture can be obtained by appropriately determining, for example, the composition of the ionizing radiation curable resin, the size and added amount of the particles, the thickness of the coating film, the oxygen concentration in the gas phase in the second irradiation step, and the integrated light quantities in the first and second irradiation steps.

### Examples

Examples of the present invention will be described below.

### <Example 1>

The decorative sheet 1 described referring to Figs. 1 to 3 was prepared using the following method. In the present example, the transparent resin layer 4, primer layer 6, adhesive layer 7, and concealing layer 8 were omitted.

First, impregnated paper having a basis weight of 50 g/m² (GFR-506, manufactured by Kohjin Co., Ltd.) was used as the primary film layer 2. On one side of the primary film layer 2, a pattern layer 3 was formed using oily nitrocellulose resin-based gravure printing inks (various colors of PCNT (PCRNT) manufactured by Toyo Ink Co., Ltd.). The pattern of the pattern layer was a wood grain pattern.

Next, a surface protective layer-forming coating liquid was prepared. The following ionizing radiation curable resin was used as the surface protective layer-forming coating liquid.

### Ionizing radiation curable resin

Type: Trimethylolpropane EO-modified triacrylate (15 moles of EO added)
Product name: SR9035 (manufactured by Sartomer)
Formulation: 100 parts by mass

Next, the surface protective layer-forming coating liquid was stirred. Stirring was performed as follows.

First, the surface protective layer-forming coating liquid was placed in a stirring vessel. The stirring vessel used was ZT-20 (manufactured by Satake MultiMix Corporation). For stirring, a Satake Multi A Mixer, AT14-VPR-0.09BI (manufactured by SATAKE MultiMix Corporation) was used. The stirring method used was central stirring. The power used for stirring was 0.75 kW, and the stirring time was 5 minutes.

Next, the surface protective layer-forming coating liquid was applied to the pattern layer 3. A coating film of the surface protective layer-forming coating liquid was formed with a thickness of 4.3 µm.

After that, the first irradiation step was performed. Specifically, using a high-pressure mercury lamp emitting UV light having a main wavelength of 365 nm, the UV light was applied in the atmosphere to the surface of the coating film formed of the surface protective layer-forming coating liquid, so that the integrated light quantity was 60 mJ/cm². Thus, the coating film was partially cured.

After that, the second irradiation step was performed. Specifically, using an Xe excimer lamp, UV light having a wavelength of 172 nm was applied to the surface of the coating film formed of the surface protective layer-forming coating liquid in a nitrogen gas atmosphere at atmospheric pressure in which the oxygen concentration was 200 ppm, so that the integrated light quantity was 60 mJ/cm². Thus, wrinkles were produced on the surface of the coating film.

Subsequently, the third irradiation step was performed. Specifically, the coating film was irradiated with ionizing radiation and the entirety of the coating film was cured to thereby form a surface protective layer 5.

In this way, a decorative sheet 1 was obtained.

### <Example 2>

A decorative sheet 1 was prepared as in Example 1, except for the following points. Specifically, in the present example, the following particles were added to the surface protective layer-forming coating liquid, so that the particle content was 2 parts by mass relative to 100 parts by mass of the ionizing radiation curable resin.

### Particles

Product Name: SYLYSIA 250N (manufactured by Fuji Silysia Chemical Ltd.)
Particle size: 5 µm
Formulation: 2 parts by mass
A coating film of the surface protective layer-forming coating liquid was formed with a thickness of 5.8 µm.

### <Example 3>

A decorative sheet 1 was prepared as in Example 1, except for the following points. Specifically, in the present example, the same particles as those used in Example 2 were added to the surface protective layer-forming coating liquid, so that the particle content was 3 parts by mass relative to 100 parts by mass of the ionizing radiation curable resin. A coating film of the surface protective layer-forming coating liquid was formed with a thickness of 4.1 µm.

### <Example 4>

A decorative sheet 1 was prepared as in Example 1, except for the following points. Specifically, in the present example, the same particles as those used in Example 2 were added to the surface protective layer-forming coating liquid, so that the particle content was 4 parts by mass relative to 100 parts by mass of the ionizing radiation curable resin. A coating film of the surface protective layer-forming coating liquid was formed with a thickness of 5.9 µm.

### <Example 5>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 4.1 µm.

### <Example 6>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. The power used for stirring the surface protective layer-forming coating liquid was 0.3 kW, and the stirring time was 5 minutes. A coating film of the surface protective layer-forming coating liquid was formed with a thickness of 4.1 µm.

### <Example 7>

A decorative sheet 1 was prepared as in Example 1, except for the following points. Specifically, in the present example, the same particles as those used in Example 2 were added to the surface protective layer-forming coating liquid, so that the particle content was 9.7 parts by mass relative to 100 parts by mass of the ionizing radiation curable resin. A coating film of the surface protective layer-forming coating liquid was formed with a thickness of 5.3 µm.

### <Example 8>

A decorative sheet 1 was prepared as in Example 1, except for the following points. Specifically, in the present example, the same particles as those used in Example 2 were added to the surface protective layer-forming coating liquid, so that the particle content was 10.3 parts by mass relative to 100 parts by mass of the ionizing radiation curable resin. A coating film of the surface protective layer-forming coating liquid was formed with a thickness of 5 µm.

### <Example 9>

A decorative sheet 1 was prepared as in Example 1, except for the following points. Specifically, in the present example, the same particles as those used in Example 2 were added to the surface protective layer-forming coating liquid, so that the particle content was 11.7 parts by mass relative to 100 parts by mass of the ionizing radiation curable resin. A coating film of the surface protective layer-forming coating liquid was formed with a thickness of 5.3 µm.

### <Comparative Example 1>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 1.4 µm.

### <Comparative Example 2>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 1.8 µm.

### <Example 10>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 2.3 µm.

### <Example 11>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 2.5 µm.

### <Example 12>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 9.2 µm.

### <Comparative Example 3>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 12.3 µm.

### <Comparative Example 4>

A decorative sheet 1 was prepared as in Example 1, except for the following points. Specifically, in the present example, the same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 15.2 µm.

### <Example 13>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 310P (manufactured by Fuji Silysia Chemical Ltd.)
Particle size: 2 µm
Formulation: 5 parts by mass
A coating film of the surface protective layer-forming coating liquid was formed with a thickness of 4.8 µm.

### <Example 14>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 420 (manufactured by Fuji Silysia Chemical Ltd.)
Particle size: 3 µm
Formulation: 5 parts by mass
A coating film of the surface protective layer-forming coating liquid was formed with a thickness of 4.6 µm.

### <Example 15>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 430 (manufactured by Fuji Silysia Chemical Ltd.)
Particle size: 4 µm
Formulation: 5 parts by mass
A coating film of the surface protective layer-forming coating liquid was formed with a thickness of 5.1 µm.

### <Example 16>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 450 (manufactured by Fuji Silysia Chemical Ltd.)
Particle size: 8 µm
Formulation: 5 parts by mass
A coating film of the surface protective layer-forming coating liquid was formed with a thickness of 4.9 µm.

### <Example 17>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 882 (manufactured by Fuji Silysia Chemical Ltd.)
Particle size: 10 µm
Formulation: 5 parts by mass
A coating film of the surface protective layer-forming coating liquid was formed with a thickness of 5.5 µm.

### <Comparative Example 5>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product Name: SYLYSIA 780 (manufactured by Fuji Silysia Chemical Ltd.)
Particle size: 11 µm
Formulation: 5 parts by mass
A coating film of the surface protective layer-forming coating liquid was formed with a thickness of 4.8 µm.

### <Comparative Example 6>

A decorative sheet 1 was prepared as in Example 1, except for the following points. Specifically, in the present example, the following particles were added to the surface protective layer-forming coating liquid, so that the particle content was 5 parts by mass relative to 100 parts by mass of the ionizing radiation curable resin.

### Particles

Product name: sicastar 43-00-154 (manufactured by COREFRONT)
Particle size: 14 µm
Formulation: 5 parts by mass
A coating film of the surface protective layer-forming coating liquid was formed with a thickness of 5.3 µm.

### <Comparative Example 7>

A decorative sheet 1 was prepared as in Example 1, except for the following points. Specifically, in the present example, the following ionizing radiation curable resin was used.

### Ionizing radiation curable resin

Type: Trimethylolpropane triacrylate
Product name: NK Ester A-TMPT (manufactured by Shin-Nakamura Chemical Co., Ltd.)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 5 µm.

### <Comparative Example 8>

A decorative sheet 1 was prepared as in Example 1, except for the following points. Specifically, in the present example, the following ionizing radiation curable resin was used.

### Ionizing radiation curable resin

Type: Trimethylolpropane EO-modified triacrylate (3 moles of EO added)
Product name: Miramer M3130 (manufactured by Miwon)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 4.9 µm.

### <Comparative Example 9>

A decorative sheet 1 was prepared as in Example 1, except for the following points. Specifically, in the present example, the following ionizing radiation curable resin was used.

### Ionizing radiation curable resin

Type: Trimethylolpropane EO-modified triacrylate (6 moles of EO added)
Product name: Miramer M3160 (manufactured by Miwon)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 4.9 µm.

### <Comparative Example 10>

A decorative sheet 1 was prepared as in Example 1, except for the following points. Specifically, in the present example, the following ionizing radiation curable resin was used.

### Ionizing radiation curable resin

Type: Trimethylolpropane EO-modified triacrylate (9 moles of EO added)
Product name: SR502 (manufactured by Sartomer)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 5.3 µm.

### <Example 18>

A decorative sheet 1 was prepared as in Example 1, except for the following points. Specifically, in the present example, the following ionizing radiation curable resin was used.

### Ionizing radiation curable resin

Type: Trimethylolpropane EO-modified triacrylate (20 moles of EO added)
Product name: NK Ester AT-20E (manufactured by Shin-Nakamura Chemical Co., Ltd.)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 6.1 µm.

### <Example 19>

A decorative sheet 1 was prepared as in Example 1, except for the following points. Specifically, in the present example, the following ionizing radiation curable resin was used.

### Ionizing radiation curable resin

Type: Ethoxylated pentaerythritol tetraacrylate (20 moles of EO added)
The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 4.1 µm.

### <Example 20>

First, a shaping mold was prepared. The shaping mold was prepared using a method similar to the method of preparing the decorative sheet of Example 19, except for the following points. Specifically, when preparing the shaping mold, a coating film of the surface protective layer-forming coating liquid was formed with a thickness of 3.9 µm.

Next, using the mold, the surface configuration of the mold as a template was transferred to a surface protective layer on a decorative sheet. The transfer was performed using the following method.

A UV curable polydimethylsiloxane solution (Agent A: X-34-4184A, Agent B: X-34-4184B, manufactured by Shin-Etsu Chemical Co., Ltd.) was diluted with decamethylcyclopentasiloxane (KF-995, manufactured by Shin-Etsu Chemical Co., Ltd.) to prepare polydimethylsiloxane mixture in which Agent A, Agent B, and the diluent had a weight ratio of 1:1:7 or more preferably 1:1:8. Subsequently, the polydimethylsiloxane mixture was applied to the shaping mold with an application amount of 10 g/m² to form a coating film. After that, a PET film having a thickness of 15 µm was pressed against the coating film. After curing the polydimethylsiloxane mixture by UV irradiation, the shaping mold was released from the UV-cured film of the polydimethylsiloxane mixture. The UV-cured film of the polydimethylsiloxane mixture is referred to as a primary transfer film.

The uneven surface of the primary transfer film was subjected to UV-ozone treatment, followed by surface modification by vapor-depositing perfluorodecyltriethoxysilane, and the reaction was completed in an oven at 100°C. Furthermore, the polydimethylsiloxane mixture was applied to the primary transfer film with the same application amount as above and a PET film having a thickness of 15 µm was pressed against the coating film. The polydimethylsiloxane mixture was cured by UV irradiation, and the resultant film is referred to as a secondary transfer film. The secondary transfer film was released from the primary transfer film to form a mold used for forming an uneven structure of the surface protective layer.

On the other hand, the surface protective layer-forming coating liquid used in Example 19 was applied to a pattern layer 3 in the same procedure as in Example 19 to prepare a coating film formed of the surface protective layer-forming coating liquid. The above mold was pressed against the prepared coating film, followed by irradiating the coating film twice via the PET film with the same ionizing radiation as that used in the third irradiation step of Example 19 to thereby cure the coating film. After that, the secondary transfer film was released to form an uneven structure of the surface protective layer.

In this way, a decorative sheet was obtained.

### <Example 21>

A decorative sheet 1 was prepared as in Example 1, except for the following points. Specifically, in the present example, the following ionizing radiation curable resin was used.

### Ionizing radiation curable resin

Type: Ethoxylated pentaerythritol tetraacrylate (35 moles of EO added)
Product name: NK Ester ATM-35E (manufactured by Shin-Nakamura Chemical Co., Ltd.)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 5.8 µm.

### <Comparative Example 11>

A decorative sheet 1 was prepared as in Example 1, except for the following points. Specifically, in the present example, the following ionizing radiation curable resin was used.

### Ionizing radiation curable resin

Type: Trimethylolpropane EO-modified triacrylate (6 moles of EO added)
Product name: Miramer M3160 (manufactured by Miwon)

The same particles as those used in Example 2 were added to the surface protective layer-forming coating liquid, so that the particle content was 15 parts by mass relative to 100 parts by mass of the ionizing radiation curable resin. A coating film of the surface protective layer-forming coating liquid was formed with a thickness of 5.2 µm, and then the coating film was cured by performing the third irradiation step without performing the first and second irradiation steps.

### <Comparative Example 12>

A decorative sheet 1 was prepared as in Example 1, except for the following points. Specifically, in the present example, the following ionizing radiation curable resin was used.

### Ionizing radiation curable resin

Type: Ethylene glycol diacrylate (9 moles of EO added)
Product name: Light Acrylate 9EG-A (manufactured by Kyoeisha Chemical Co., Ltd.)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 5.7 µm.

### <Comparative Example 13>

A decorative sheet 1 was prepared as in Example 1, except for the following points. Specifically, in the present example, the following ionizing radiation curable resin was used.

### Ionizing radiation curable resin

Type: Ethoxylated dipentaerythritol hexaacrylate (12 moles of EO added)
Product name: NK Ester A-DPH-12E (manufactured by Shin-Nakamura Chemical Co., Ltd.)

The same particles as those used in Example 2 were added to the surface protective layer-forming coating liquid, so that the particle content was 5 parts by mass relative to 100 parts by mass of the ionizing radiation curable resin.
A coating film of the surface protective layer-forming coating liquid was formed with a thickness of 6.2 µm.

### <Comparative Example 14>

A decorative sheet 1 was prepared as in Example 1, except for the following points. Specifically, in the present example, the following ionizing radiation curable resin was used.

### Ionizing radiation curable resin

Type: Pentaerythritol tetraacrylate
Product name: NK Ester A-TMMT (manufactured by Shin-Nakamura Chemical Co., Ltd.)

The same particles as those used in Example 2 were added to the surface protective layer-forming coating liquid, so that the particle content was 5 parts by mass relative to 100 parts by mass of the ionizing radiation curable resin. A coating film of the surface protective layer-forming coating liquid was formed with a thickness of 6.8 µm.

### <Evaluation>

The above decorative sheets were evaluated for the following matters.

### (1) Thickness of surface protective layer

The thickness of each surface protective layer was measured as follows. Each decorative sheet 1 was embedded in a resin such as a cold-curing epoxy resin or UV curable resin for sufficient curing, followed by cutting so that a section of the decorative sheet 1 appeared, which was then subjected to mechanical polishing to obtain a measurement surface. Subsequently, the thickness of the surface protective layer was measured using a scanning electron microscope SIGMA 500 manufactured by Carl Zeiss Microscopy GmbH. Measurements were made at 25 arbitrary points, and a measured value obtained by averaging the 25 points was defined to be the thickness t of the surface protective layer. The measurements were performed under conditions of: acceleration voltage of 0.5 keV (low acceleration voltage), imaging mode of SE2 mode, and magnification of 2,000 times. No sputtering was performed on the measurement samples. The thickness t of the surface protective layer was equal to the thickness of the coating film formed of the surface protective layer-forming coating liquid.

### (2) Gloss

60-degree gloss was measured using a Rhopoint IQ (manufactured by Konica Minolta Co., Ltd.). 60-degree gloss was measured at 5 arbitrary points in respective measurement areas not overlapping with each other and an average of the measurements was used. The 60-degree gloss in the following Tables 1 to 5 refers to this 60-degree gloss.

### (3) Tactile sensation

Tactile sensation was evaluated using the following method.

First, advance preparations were made for tactile sensation related to surface roughness to ensure that the evaluation criteria were consistent between evaluators. Specifically, three standard specimens having different surface textures (i.e., a specimen whose Rdq was less than 0.15, a specimen whose Rdq was in the range of 0.15 to 0.4, and a specimen whose Rdq was greater than 0.4) were prepared. Next, five blindfolded evaluators were each asked to run their finger across the surface of each standard specimen while pressing it with their finger, and then to classify the tactile sensation related to surface roughness into one of the following three groups.
Group 1: As there was little sensation of roughness, a tactile sensation similar to that of a flat plastic sheet was obtained.
Group 2: As slight roughness was felt, a tactile sensation similar to that of wood was obtained.
Group 3: As strong roughness was felt, a tactile sensation similar to that of sandpaper was obtained.

The above procedure was repeated until the evaluations of each evaluator coincided three or more times in succession and the evaluation results between the evaluators coincided three times in succession.

Next, advance preparations were also made for tactile sensation related to temperature perception using a method similar to the method used for tactile sensation related to surface roughness to ensure that the evaluation criteria were consistent between the evaluators. Specifically, three standard specimens having different surface textures (i.e., a specimen whose Rmr (10%) was in the range of 0.05 to 0.35, a specimen whose Rmr (10%) was greater than 0.35 and less than 0.4, and a specimen whose Rmr (10%) was in the range of 0.4 to 0.7) were prepared. Next, five blindfolded evaluators were each asked to run their finger across the surface of each standard specimen while pressing it with their finger, and then to classify the tactile sensation related to temperature perception into one of the following three groups.
Group a: A warm tactile sensation was obtained.
Group b: A lukewarm tactile sensation was obtained.
Group c: A cold tactile sensation was obtained.

The above procedure was repeated until the evaluations of each evaluator coincided three or more times in succession and the evaluation results between the evaluators coincided three times in succession.

Next, for each of the decorative sheets prepared in the above examples and comparative examples, the blindfolded evaluators were each asked to run their fingers across the surface of the surface protective layer while pressing it with their finger, and then to classify the tactile sensation related to roughness and the tactile sensation related to temperature perception into the above three groups of the respective tactile sensations. Then, this procedure was repeated until the evaluations of each evaluator coincided three or more times in succession and the evaluation results between the evaluators coincided three times in succession. Based on the results, tactile sensations were evaluated according to the following criteria.
A (warm tactile sensation of wood): The case where the tactile sensation related to surface roughness was classified into Group 2 and the tactile sensation related to temperature perception was classified into Group a.
B (tactile sensation other than the warm tactile sensation of wood): The case where the tactile sensation related to surface roughness was classified into a group other than Group 2, or the tactile sensation related to temperature perception was classified into a group other than Group a.

### (4) Fingerprint resistance

To evaluate fingerprint resistance, fingerprint wipeability was evaluated.

Specifically, first, 60-degree gloss of the surface of each decorative sheet was measured and this 60-degree gloss was taken to be an initial gloss. Subsequently, a fingerprint resistance evaluation liquid was adhered to each surface protective layer, and then the fingerprint resistance evaluation liquid adhered to the surface of the decorative sheet was wiped off. A higher fatty acid was used here as the fingerprint resistance evaluation liquid. After that, 60-degree gloss at the portion from which the fingerprint resistance evaluation liquid had been wiped off was measured and this 60-degree gloss was taken to be a gloss after wiping.

A fingerprint wiping rate was calculated from the following formula. $Fingerprint wiping rate \left(%\right) = \left(Gloss after wiping/Initial gloss\right) \times 100$

The evaluation criteria were as follows.

AA: Wiping rate was 70% or more and less than 250%.

A: Wiping rate was 50% or more and less than 70%, or 250% or more and less than 300%.

B: Wiping rate was less than 50%, or 300% or more.

### (5) Stain resistance

The stain A test stipulated in the Japanese Agricultural Standards (JAS) was performed to evaluate stain resistance. Specifically, lines each having a width of 10 mm were drawn on the surface protective layer of each decorative sheet using blue ink, black quick-drying ink, and red crayon, respectively, and left to stand for 4 hours. After that, the blue ink, black quick-drying ink, and red crayon were wiped off using an ethanol-soaked cloth.

The evaluation criteria were as follows.

AA: The colored lines could all be easily wiped off.

A: Part of the colored lines could be wiped off but part of them remained as stains.

B: None of the colored lines could be wiped off.

### (6) Scratch resistance

Each decorative sheet was attached to a wood substrate B using a urethane-based adhesive. After that, a steel wool rubbing test was performed to evaluate scratch resistance. Specifically, with a load of 100 g imposed, the decorative sheet was rubbed with steel wool for 20 strokes, and scratches and gloss changes caused on the surface of the decorative sheet were visually examined.

The evaluation criteria were as follows.

AA: No scratches or gloss changes were observed on the surface.

A: Slight scratches or gloss changes were observed on the surface.

B: Significant scratches or gloss changes were observed on the surface.

### (7) Formability

Each obtained decorative sheet was attached to a wood substrate B using a urethane-based adhesive so that the primary film layer-side (i.e., the rear surface of the decorative sheet) faced the wood substrate B. After that, a V-shaped groove was cut, so that the decorative sheet was not scratched, to the depth of the boundary between the wood substrate B and the decorative sheet where they were bonded together.

Next, the wood substrate B was bent to a 90-degree angle along the V-shaped groove so that the surface protective layer-side surface of the decorative sheet (i.e., the front surface of the decorative sheet) was folded in a mountain fold. The folded portion of the surface of the decorative sheet was observed using an optical microscope to examine whether blushing or cracking had occurred.

The evaluation criteria were as follows.

AA: No blushing or cracking was observed.

A: Blushing was observed partly.

B: Blushing was observed on the entire surface, or cracking was observed partly.

### (8) Load length ratio Rmr (10%), root mean square slope Rdq, and root mean square height Rq

The load length ratio Rmr (10%), the root mean square slope Rdq, and the root mean square height Rq were calculated as described in the detailed description. For measurement of the roughness curve used for calculating Rmr (10%), Rdq, and Rq, a compact surface roughness measuring instrument SJ-210 (manufactured by Mitutoyo Corporation) (contact-type surface roughness meter) was used. In this case, measurements were made at five points in respective areas not overlapping with each other and an average of these measurements was used. The internal settings were as follows: Roughness Standard: JIS 2001, Evaluation Curve: R curve, Filter: GAUSS, Cutoff Value λs: 8 µm, Cutoff Value λc: 2.5 mm, Number of Intervals: 5, Pre-run/Post-run: OFF, Measurement Speed: 0.5 mm/s, and Measurement Range: AUTO. Furthermore, the cutting level criterion for calculating the load length ratio was set to Peak, and the cutting level was set to a level including at least 10%.

Evaluation results are shown in Tables 1 to 5. In Tables 1 to 5, if the evaluation for tactile sensation was A (warm tactile sensation of wood), A is shown in the tactile sensation column, and if it was B (tactile sensation other than the warm tactile sensation of wood), B is shown in the column. In the production process of the decorative sheet 1, if the stirring method as in Example 1 was used, A was indicated in the stirring conditions column, and if the stirring method as in Example 6 was used, B was indicated in the stirring conditions column. The cutting level (µm) represents the cutting level when the load length ratio Rmr (10%) was calculated.

**[Table 1]**

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Second irradiation step performed? | | | Yes | Yes | Yes | Yes | Yes | Yes | Yes | Yes | Yes |
| Surface texture | | | Ridged | Ridged | Ridged | Ridged | Ridged | Ridged | Ridged | Ridged | Ridged |
| Rmr (10%) | | | 0.14 | 0.14 | 0.10 | 0.17 | 0.12 | 0.12 | 0.20 | 0.20 | 0.22 |
| Cutting level (µm) | | | 0.77 | 1.02 | 0.56 | 0.91 | 0.49 | 0.49 | 0.59 | 0.53 | 0.58 |
| Rdq | | | 0.33 | 0.33 | 0.29 | 0.32 | 0.28 | 0.28 | 0.28 | 0.26 | 0.26 |
| Rq (µm) | | | 1.28 | 1.77 | 0.98 | 1.59 | 0.86 | 0.86 | 0.91 | 0.80 | 0.80 |
| Thickness (µm) | | | 4.3 | 5.8 | 4.1 | 5.9 | 4.1 | 4.1 | 5.3 | 5 | 5.3 |
| Acrylic resin | Number of functional groups | | 3 | 3 | 3 | 3 | 3 | 3 | 3 | 3 | 3 |
| | Repeating structure | Structure | C₂H₄O | C₂H₄O | C₂H₄O | C₂H₄O | C₂H₄O | C₂H₄O | C₂H₄O | C₂H₄O | C₂H₄O |
| | | Number of repeat units | 15 | 15 | 15 | 15 | 15 | 15 | 15 | 15 | 15 |
| Additive | Particle size (µm) | | - | 5 | 5 | 5 | 5 | 5 | 5 | 5 | 5 |
| | Added amount (part by mass) | | 0 | 2 | 3 | 4 | 5 | 5 | 9.7 | 10.3 | 11.7 |
| Stirring conditions | | | A | A | A | A | A | B | A | A | A |
| Transfer step performed? | | | No | No | No | No | No | No | No | No | No |
| 60-degree gloss | | | 3.9 | 3.1 | 3.8 | 2.5 | 2.2 | 2.2 | 2.1 | 2.1 | 2.9 |
| Fingerprint resistance | | | AA | AA | AA | AA | AA | AA | AA | A | A |
| Stain resistance | | Stain A test | AA | AA | AA | AA | AA | AA | AA | A | B |
| Scratch resistance | | Steel wool | AA | AA | AA | AA | AA | AA | AA | A | B |
| Formability | | V-cut | AA | AA | AA | AA | AA | AA | AA | A | B |
| Tactile sensation | | Warmness of wood | A | A | A | A | A | A | A | A | A |

**[Table 2]**

| | | | Comp. Ex. 1 | Comp. Ex. 2 | Ex. 10 | Ex.11 | Ex. 12 | Comp. Ex. 3 | Comp. Ex. 4 |
|---|---|---|---|---|---|---|---|---|---|
| Second irradiation step performed? | | | Yes | Yes | Yes | Yes | Yes | Yes | Yes |
| Surface texture | | | Ridged | Ridged | Ridged | Ridged | Ridged | Ridged | Ridged |
| Rmr (10%) | | | 0.03 | 0.04 | 0.06 | 0.07 | 0.29 | 0.36 | 0.39 |
| Cutting level (µm) | | | 0.17 | 0.21 | 0.25 | 0.27 | 1.83 | 2.75 | 3.06 |
| Rdq | | | 0.20 | 0.20 | 0.23 | 0.25 | 0.35 | 0.42 | 0.49 |
| Rq (µm) | | | 0.31 | 0.37 | 0.45 | 0.48 | 3.20 | 4.91 | 5.67 |
| Thickness (µm) | | | 1.4 | 1.8 | 2.3 | 2.5 | 9.2 | 12.3 | 15.2 |
| Acrylic resin | Number of functional groups | | 3 | 3 | 3 | 3 | 3 | 3 | 3 |
| | Repeating structure | Structure | C₂H₄O | C₂H₄O | C₂H₄O | C₂H₄O | C₂H₄O | C₂H₄O | C₂H₄O |
| | | Number of repeat units | 15 | 15 | 15 | 15 | 15 | 15 | 15 |
| Additive | Particle size (µm) | | 5 | 5 | 5 | 5 | 5 | 5 | 5 |
| | Added amount (part by mass) | | 5 | 5 | 5 | 5 | 5 | 5 | 5 |
| Stirring conditions | | | A | A | A | A | A | A | A |
| Transfer step performed? | | | No | No | No | No | No | No | No |
| 60-degree gloss | | | 11.3 | 9.9 | 7.2 | 4.6 | 1.9 | 1.7 | 1.4 |
| Fingerprint resistance | | | AA | AA | AA | AA | AA | AA | AA |
| Stain resistance | | Stain A test | AA | AA | AA | AA | AA | AA | AA |
| Scratch resistance | | Steel wool | A | A | AA | AA | AA | AA | AA |
| Formability | | V-cut | AA | AA | AA | AA | AA | A | A |
| Tactile sensation | | Warmness of wood | B | B | A | A | A | B | B |

**[Table 3]**

| | | | Ex. 13 | Ex. 14 | Ex. 15 | Ex.16 | Ex. 17 | Comp. Ex. 5 | Comp. Ex. 6 |
|---|---|---|---|---|---|---|---|---|---|
| Second irradiation step performed? | | | Yes | Yes | Yes | Yes | Yes | Yes | Yes |
| Surface texture | | | Ridged | Ridged | Ridged | Ridged | Ridged | Ridged | Ridged |
| Rmr (10%) | | | 0.11 | 0.10 | 0.12 | 0.14 | 0.22 | 0.28 | 0.31 |
| Cutting level (µm) | | | 0.61 | 0.57 | 0.67 | 0.63 | 0.76 | 0.61 | 0.71 |
| Rdq | | | 0.23 | 0.25 | 0.28 | 0.34 | 0.40 | 0.42 | 0.57 |
| Rq (µm) | | | 1.07 | 1.01 | 1.18 | 1.11 | 1.33 | 1.07 | 1.25 |
| Thickness (µm) | | | 4.8 | 4.6 | 5.1 | 4.9 | 5.5 | 4.8 | 5.3 |
| Acrylic resin | Number of functional groups | | 3 | 3 | 3 | 3 | 3 | 3 | 3 |
| | Repeating structure | Structure | C₂H₄O | C₂H₄O | C₂H₄O | C₂H₄O | C₂H₄O | C₂H₄O | C₂H₄O |
| | | Number of repeat units | 15 | 15 | 15 | 15 | 15 | 15 | 15 |
| Additive | Particle size (µm) | | 2 | 3 | 4 | 8 | 10 | 11 | 14 |
| | Added amount (part by mass) | | 5 | 5 | 5 | 5 | 5 | 5 | 5 |
| Stirring conditions | | | A | A | A | A | A | A | A |
| Transfer step performed? | | | No | No | No | No | No | No | No |
| 60-degree gloss | | | 3 | 2.8 | 2.7 | 2.5 | 2.2 | 2 | 1.5 |
| Fingerprint resistance | | | AA | AA | AA | AA | AA | A | A |
| Stain resistance | | Stain A test | AA | AA | AA | AA | AA | A | A |
| Scratch resistance | | Steel wool | AA | AA | AA | AA | AA | A | B |
| Formability | | V-cut | AA | AA | AA | AA | AA | AA | A |
| Tactile sensation | | Warmness of wood | A | A | A | A | A | B | B |

**[Table 4]**

| | | | Comp. Ex. 7 | Comp. Ex. 8 | Comp. Ex. 9 | Comp. Ex.10 | Ex. 18 | Ex. 19 | Ex. 20 | Ex. 21 |
|---|---|---|---|---|---|---|---|---|---|---|
| Second irradiation step performed? | | | Yes | Yes | Yes | Yes | Yes | Yes | Yes | Yes |
| Surface texture | | | Uneven due to particles | Ridged | Ridged | Ridged | Ridged | Ridged | Ridged | Ridged |
| Rmr (10%) | | | 0.10 | 0.85 | 0.58 | 0.39 | 0.17 | 0.22 | 0.21 | 0.07 |
| Cutting level (µm) | | | 0.65 | 0.34 | 0.43 | 0.58 | 0.93 | 0.38 | 0.35 | 0.98 |
| Rdq | | | 0.13 | 0.07 | 0.14 | 0.20 | 0.40 | 0.20 | 0.20 | 0.36 |
| Rq (µm) | | | 0.68 | 0.60 | 0.74 | 1.00 | 1.65 | 0.67 | 0.62 | 1.68 |
| Thickness (µm) | | | 5 | 4.9 | 4.9 | 5.3 | 6.1 | 4.1 | 3.9 | 5.8 |
| Acrylic resin | Number of functional groups | | 3 | 3 | 3 | 3 | 3 | 4 | 4 | 4 |
| | Repeating structure | Structure | None | C₂H₄O | C₂H₄O | C₂H₄O | C₂H₄O | C₂H₄O | C₂H₄O | C₂H₄O |
| | | Number of repeat units | 0 | 3 | 6 | 9 | 20 | 20 | 20 | 35 |
| Additive | Particle size (µm) | | 5 | 5 | 5 | 5 | 5 | 5 | 5 | 5 |
| | Added amount (part by mass) | | 5 | 5 | 5 | 5 | 5 | 5 | 5 | 5 |
| Stirring conditions | | | A | A | A | A | A | A | A | A |
| Transfer step performed? | | | No | No | No | No | No | No | Yes | No |
| 60-degree gloss | | | 15.2 | 3.9 | 3.5 | 3.1 | 2.3 | 8.8 | 9.7 | 2.2 |
| Fingerprint resistance | | | B | AA | AA | AA | AA | AA | AA | AA |
| Stain resistance | | Stain A test | AA | AA | AA | AA | AA | AA | AA | AA |
| Scratch resistance | | Steel wool | AA | AA | AA | AA | A | AA | AA | A |
| Formability | | V-cut | B | A | AA | AA | AA | A | A | AA |
| Tactile sensation | | Warmness of wood | B | B | B | B | A | A | A | A |

**[Table 5]**

| | | | Comp. Ex. 11 | Comp. Ex. 12 | Comp. Ex. 13 | Comp. Ex. 14 |
|---|---|---|---|---|---|---|
| Second irradiation step performed? | | | No | Yes | Yes | Yes |
| Surface texture | | | Uneven due to particles | Ridged | Uneven due to particles | Uneven due to particles |
| Rmr (10%) | | | 0.12 | 0.38 | 0.11 | 0.10 |
| Cutting level (µm) | | | 0.88 | 1.44 | 0.62 | 0.68 |
| Rdq | | | 0.12 | 0.38 | 0.13 | 0.11 |
| Rq (µm) | | | 1.13 | 2.42 | 0.71 | 0.65 |
| Thickness (µm) | | | 5.2 | 5.7 | 6.2 | 6.8 |
| Acrylic resin | Number of functional groups | | 3 | 2 | 6 | 4 |
| | Repeating structure | Structure | C₂H₄O | C₂H₄O | C₂H₄O | None |
| | | Number of repeat units | 6 | 9 | 12 | 0 |
| Additive | Particle size (µm) | | 5 | 5 | 5 | 5 |
| | Added amount (part by mass) | | 15 | 5 | 5 | 5 |
| Stirring conditions | | | A | A | A | A |
| Transfer step performed? | | | No | No | No | No |
| 60-degree gloss | | | 9.2 | 3.3 | 11.8 | 17.7 |
| Fingerprint resistance | | | B | AA | B | B |
| Stain resistance | | Stain A test | B | AA | AA | AA |
| Scratch resistance | | Steel wool | B | B | AA | AA |
| Formability | | V-cut | AA | AA | B | B |
| Tactile sensation | | Warmness of wood | B | B | B | B |

As shown in Tables 1 to 5, the decorative sheets of Examples 1 to 21 gave the evaluators the warm tactile sensation of wood. The decorative sheets of Examples 1 to 21 had low gloss. The decorative sheets of Examples 1 to 7 and 10 to 17 were excellent in all of the evaluations for fingerprint resistance, stain resistance, scratch resistance, and formability. However, the decorative sheets of Comparative Examples 1 to 14 did not give the evaluators the warm tactile sensation of wood.

### [Reference Signs List]

- 1: Decorative sheet
- 2: Primary film layer
- 3: Pattern layer
- 4: Transparent resin layer
- 5: Surface protective layer
- 6: Primer layer
- 7: Adhesive layer
- 8: Concealing layer
- 11: Decorative material
- B: Substrate

## Claims

1. A decorative sheet comprising
a primary film layer and a surface protective layer provided on one surface of the primary film layer, wherein
the surface protective layer has a surface provided with an uneven structure; and
the uneven structure of the surface protective layer has a load length ratio Rmr (10%) of 0.05 or more and 0.35 or less at a cutting level of 10%, a root mean square slope Rdq of 0.15 or more and 0.4 or less, and a root mean square height Rq of 0.4 µm or more and 4.0 µm or less.

2. The decorative sheet according to claim 1, wherein the surface protective layer has a gloss of less than 10.

3. The decorative sheet according to claim 1 or 2, wherein the surface protective layer contains a cured resin and particles.

4. The decorative sheet according to claim 3, wherein the particles have an average particle size of 3 µm or more.

5. The decorative sheet according to claim 3 or 4, wherein the particles have an average particle size of 3 µm or more and 10 µm or less.

6. The decorative sheet according to any one of claims 3 to 5, wherein the particles are contained in the surface protective layer in an amount of 3 parts by mass or more and 11 parts by mass or less relative to 100 parts by mass of the resin.

7. The decorative sheet according to any one of claims 3 to 6, wherein the resin comprises an ionizing radiation curable resin.

8. The decorative sheet according to any one of claims 3 to 7, wherein the resin comprises an acrylate.

9. The decorative sheet according to any one of claims 3 to 8, wherein the resin comprises a trifunctional acrylate containing a repeating structure; and the number of repeat units of the repeating structure is 15 or more and 20 or less.

10. The decorative sheet according to any one of claims 3 to 8, wherein the resin comprises a tetrafunctional acrylate containing a repeating structure; and the number of repeat units of the repeating structure is 20 or more and 35 or less.

11. The decorative sheet according to any one of claims 1 to 10, wherein the surface protective layer has a thickness of 2 µm or more and 10 µm or less.

12. The decorative sheet according to any one of claims 1 to 11, further comprising a pattern layer between the primary film layer and the surface protective layer.

13. The decorative sheet according to claim 12, wherein the pattern layer has a wood grain pattern.

14. A decorative material, comprising
the decorative sheet according any one of claims 1 to 13; and
a substrate to which the decorative sheet is attached.
